# FASCICULE DE BREVET EUROPEEN

(11) **EP 0 384 159 B1**
(45) Date de publication et mention de la délivrance du brevet: **29.12.1993**
(21) Numéro de dépôt: 90101662.6
(22) Date de dépôt: 27.01.1990
(51) Int. Cl.: A21C 3/04, A21C 11/16

(54) **Buse de dépose d'une couche de masse fluide**
Mundstück für eine flüssige Masse
Nozzle for a fluid mass

(30) Priorité: 21.02.1989 CH 603/89
(43) Date de publication de la demande: 29.08.1990
(73) Titulaire: SOCIETE DES PRODUITS NESTLE S.A., 1800 Vevey (CH)
(72) Inventeur: Rossé, Meinrad, CH-1814 La Tour de Peilz (CH)

(56) Documents cités:
- DE-A- 3 641 438
- US-A- 2 774 106
- US-A- 2 938 231
- US-A- 4 252 519
- US-A- 4 322 202
- US-A- 4 364 722
- US-E- 30 221

## Description

La présente invention a pour objet une buse de dépose d'une couche de masse fluide, notamment de pâte foisonnée.

On connaît diverses buses d'extrusion présentant une ou plusieurs fentes d'extrusion permettant de former une ou plusieurs bandes de pâte destinées notamment à la préparation de pains plats ou de fonds de pizza par exemple.

Les problèmes rencontrés dans la construction de ces buses connues sont liés à la nécessité d'obtenir des bandes d'épaisseur homogène ou de surface lisse qui se laissent découper en articles de forme régulière. Ces problèmes ont été résolus en fonction notamment du fait que la pâte à extruder pour faire des pains plats ou des fonds de pizza présente une consistance plastique relativement ferme et qu'il faut exercer sur elle une pression relativement importante pour la faire passer à travers ces fentes.

C'est ainsi que dans une buse connue, il a été proposé de prévoir, entre la tête des vis d'une extrudeuse et de telles fentes d'extrusion, une grille ou des canaux de diffusion débouchant dans une chambre d'égalisation de pression.

De même, dans une autre buse connue, il a été proposé de prévoir, devant une telle fente d'extrusion, un diaphragme présentant lui-même une fente d'ouverture plus petite au centre que sur les bords par exemple, de manière à rétablir une certaine régularité du courant de pâte qui présentait une vitesse plus grande au centre que sur les bords.

Cependant, ces solutions connues ne sont guère transposables au cas de la dépose d'une couche de masse fluide, notamment de pâte foisonnée, telle qu'une pâte "génoise" par exemple.

La dépose d'une couche de masse fluide sur une bande de transport, par exemple, destinée à conduire la masse au travers d'une installation de traitement telle qu'un four ou tunnel de cuisson, par exemple, peut présenter des difficultés similaires à celles évoquées plus haut. Il peut être en effet nécessaire d'obtenir une couche présentant, sur toute sa largeur, une épaisseur et une texture homogènes ainsi qu'une surface régulière. Mais ceci est d'autant plus difficile que la couche présente une plus grande largeur. Or, dans une production industrielle en continu par exemple, il est essentiel de pouvoir déposer une couche de masse fluide d'un seul tenant, aussi large que possible, de manière à pouvoir exploiter au mieux la capacité d'une installation de traitement présentant des dimensions importantes.

US-A-2774106 décrit une buse de dépose d'une couche de mousse liquide expansive comprenant un raccord délimitant un canal d'entrée incliné par rapport au plan horizontal, un corps triangulaire situé dans un plan horizontal et présentant une section rectangulaire s'élargissant et pouvant également s'abaisser vers l'aval, l'extrémité dudit corps présentant la forme d'un arc pouvant être centré au sommet du corps.

US-E-30221 décrit une buse de dépose d'une couche de pâte d'épaisseur et de largeur ajustables, cette buse comprenant un corps triangulaire disposé dans un plan incliné par rapport au plan horizontal, l'extrémité du corps pouvant être incurvée et tangeante au plan horizontal.

La présente invention a pour but de proposer une buse qui permette de réaliser au mieux l'objectif industriel ci-dessus.

A cet effet, la buse de dépose d'une couche de masse fluide, notamment de pâte foisonnée, selon la présente invention, comprenant un raccord délimitant un canal d'entrée, un corps triangulaire solidaire du raccord, disposé dans un plan formant un angle avec le plan horizontal et présentant une section rectangulaire s'élargissant et s'abaissant vers l'aval, et, dans le prolongement dudit corps, une extrémité incurvée finissant tangentiellement au plan horizontal et délimitant une fente de sortie en forme d'arc de cercle centré au sommet du corps, se distingue par le fait qu'elle comprend une cage de renforcement comportant deux grilles formées de longerons transversaux et radiaux appliquées sur et sous ledit corps triangulaire et reliées de chaque côté par des traverses, l'une des grilles étant formée de longerons radiaux d'encadrement solidaires des extrémités de ses longerons transversaux, ses autres longerons radiaux appuyant sur le corps triangulaire et ses longerons transversaux étant reliés, à toutes leurs croisées, par des moyens d'ajustement de leurs interstices, et les longerons transversaux et radiaux de l'autre grille étant solidaires à toutes leurs croisées.

On a constaté qu'une buse ainsi conçue pouvait être construite à une échelle vraiment très grande tout en pouvant réellement assurer la dépose d'une couche de masse fluide d'épaisseur et texture parfaitement homogènes et de surface parfaitement régulière sur toute sa largeur. On a pu construire ainsi par exemple une buse présentant une fente de sortie de plus d'un mètre de largeur capable de déposer une couche de pâte foisonnée ne présentant pas la moindre gorge longitudinale résultant d'un défoisonnement local, tel qu'il s'en produirait notamment à la jonction de deux flux issus de deux buses plus petites juxtaposées, ni le moindre affaissement de ses bords.

La buse selon la présente invention est notamment destinée à être raccordée à une conduite d'alimentation en masse fluide fournie par une pompe reliée à une installation où la masse fluide est préparée. Ce genre de conduite présentant de préférence une section circulaire, ledit raccord peut être conçu de manière à assurer une transition régulière entre cette section circulaire et la section parallélépipédique, de préférence carrée, du sommet du corps de la buse. C'est ainsi que dans une forme préférée de réalisation de la buse selon la présente invention ledit canal d'entrée présente une section de surface approximativement constante passant d'amont en aval d'une forme circulaire à une forme carrée.

Le succès obtenu grâce à la présente buse, en matière d'homogénéité et de régularité de la couche de masse fluide qu'elle permet de déposer, est probablement dû aux effets conjugués de deux facteurs essentiels que représentent d'une part sa forme générale et d'autre part la forme précise de sa fente de sortie.

La forme générale est donc celle d'un corps triangulaire incliné, de préférence en pente douce, dont l'épaisseur décroît à mesure que sa largeur croît et qui se termine tangentiellement au plan horizontal sous l'effet de la courbure de son extrémité.

Par pente douce, on peut comprendre un plan formant un angle de environ 20 à 40° avec le plan horizontal. Quant à la courbure, celle-ci peut être suffisamment forte pour conférer à la buse une rigidité adéquate mais également suffisamment faible pour ne pas perturber le courant de masse à déposer. C'est ainsi que ladite extrémité incurvée présente de préférence une courbure concave dont le rayon est égal à 0,2-1,5 fois la largeur de la fente de sortie. De même, l'extrémité incurvée présente de préférence une courbure concave constante sur toute sa largeur et comprise entre deux lignes parallèles situées en amont de ladite fente de sortie.

Dans le même ordre d'idée, l'angle au sommet dudit corps triangulaire est de préférence aigu, de manière que le courant de masse à déposer puisse se transformer sans remous, de la forme cylindrique qu'il peut présenter à l'entrée de la buse à la forme de couche plane qu'il présente à la sortie de la buse. C'est ainsi que dans une forme de réalisation préférée de la présente buse, celle-ci présente un rapport longueur:largeur compris entre 1,5:1 et 2,5:1. Dans ce contexte, le terme "largeur" de la buse est à comprendre comme sa largeur maximale, autrement dit comme la largeur de sa fente de sortie.

La forme précise de la fente de sortie est donc celle d'un arc de cercle centré au sommet du corps triangulaire. Grâce à cette forme, tous les éléments de masse fluide formant ledit courant peuvent parcourir un chemin de même longueur entre l'entrée et la sortie de la buse, et la vitesse du courant peut présenter une très grande homogénéité sur toute la largeur de la fente de sortie.

La buse selon la présente invention peut être construite en une seule pièce réalisée en soudant deux feuilles triangulaires supérieure et inférieure à deux feuilles latérales et en fixant cet assemblage à un raccord adéquat. Les feuilles peuvent être découpées dans de la tôle d'acier inoxydable par exemple.

La présente buse comprend donc une cage de renforcement comportant deux grilles formées de longerons transversaux et radiaux appliqués sur et sous ledit corps triangulaire et reliés de chaque côté du corps par des traverses. Ces dernières peuvent être amovibles, pivotantes ou de longueur réglable de manière que le corps de la buse puisse être dégagé de la cage pour être nettoyé puis remis en place avec précision.

Les longerons transversaux et radiaux d'une grille peuvent être réalisés par exemple sous forme de tubes métalliques de sections carrées ou rectangulaires et être solidaires, par exemple soudés les uns aux autres, à toutes leurs croisées.

L'une des deux grilles est donc formée de longerons radiaux d'encadrement solidaires des extrémités de ses longerons transversaux, ses autres longerons radiaux et ses longerons transversaux étant reliés, à toutes leurs croisées, par des moyens d'ajustement de leur interstice.

Ces moyens d'ajustement de l'interstice séparant par exemple un longeron transversal d'un longeron radial appuyant sur ledit corps triangulaire sont destinés à permettre de rectifier finement le courant de masse fluide en ajustant son épaisseur en divers points du corps.

On peut, pour augmenter encore la rigidité de ladite extrémité incurvée, prévoir des supports incurvés proéminents solidaires d'un dernier longeron transversal inférieur et présentant une courbure adaptée à celle de cette extrémité.

La buse selon la présente invention est donc destinée à la dépose d'une couche de masse fluide. A titre d'exemple de masse fluide que l'on peut déposer à l'aide de cette buse, on peut citer une pâte foisonnée et en particulier une pâte "génoise". Typiquement composée d'oeufs, de sucre, de farine et d'eau, une pâte génoise peut se foisonner à froid dans un mélangeur ou un batteur, par exemple, et présenter une densité relativement faible de l'ordre de 0,4 à 0,5 g/cm³, ainsi qu'une viscosité relativement faible de l'ordre de 60 à 120 Pa.s à 20°C, par exemple.

La buse selon la présente invention sera décrite ci-après en référence au dessin annexé qui en illustre à titre d'exemple quelques formes d'exécution. Dans ce dessin,
- la figure 1 représente une vue de dessus d'une première forme d'exécution de la buse, sans sa cage de renforcement,
- la figure 2 représente une vue en coupe longitudinale de la première forme d'exécution selon la figure 1,
- la figure 3 représente une vue de dessus d'une deuxième forme d'exécution de la buse, avec sa cage de renforcement,
- la figure 4 représente une vue de côté de la forme d'exécution selon la figure 3, et,
- la figure 5 représente une vue en coupe transversale d'aval de la forme d'exécution selon la figure 3.

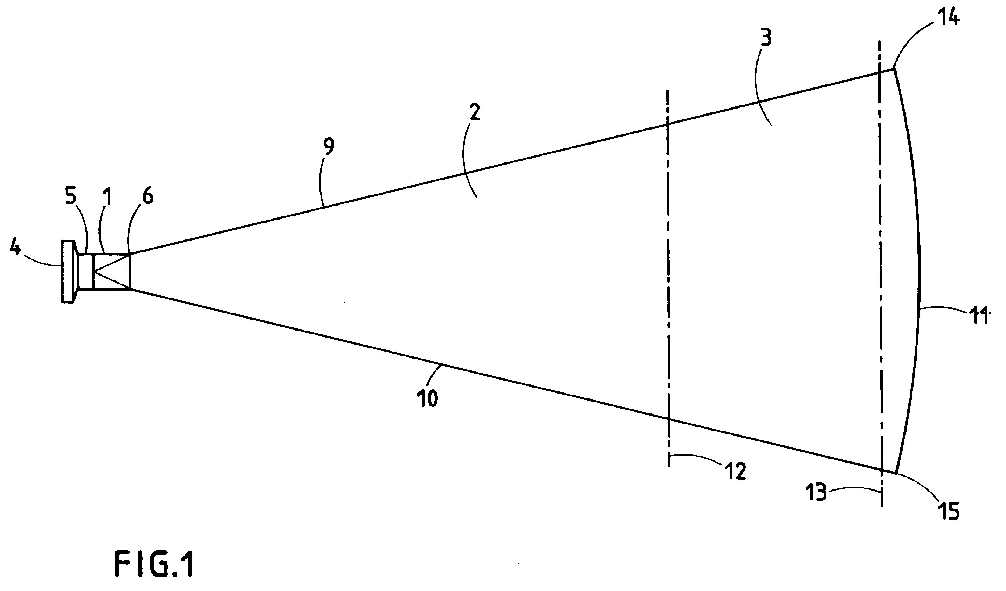

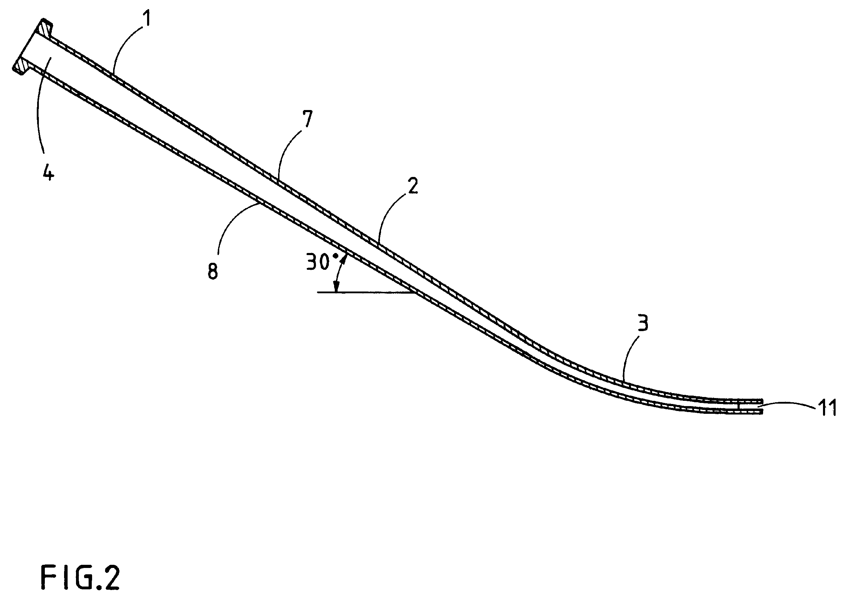

La première forme d'exécution de la buse selon la présente invention illustrée aux figures 1 et 2 comprend un raccord 1, un corps triangulaire incliné 2 solidaire du raccord 1 et, dans le prolongement du corps 2, une extrémité incurvée 3 finissant tangentiellement au plan horizontal.

Le raccord 1 délimite un canal d'entrée 4 présentant une section de surface approximativement constante passant d'amont en aval d'une forme circulaire 5 à une forme carrée 6.

Le corps triangulaire 2 est disposé dans un plan formant un angle de 30°C avec le plan horizontal. Il est formé de deux feuilles triangulaires supérieure 7 et inférieure 8 découpées dans une tôle d'acier inoxydable et soudées à deux feuilles latérales 9 et 10 de telle sorte qu'il présente une section parallélépipédique s'élargissant et s'abaissant vers l'aval. Cette section présente donc la forme d'un carré au sommet du triangle, puis la forme d'un rectangle de hauteur toujours plus faible et de largeur toujours plus grande.

L'extrémité incurvée 3 de la buse délimite une fente de sortie 11 en forme d'arc de cercle centré au sommet du corps. La largeur de cette fente 11 est approximativement égale à la moitié de la longueur de la buse. L'extrémité incurvée 3 présente une courbure concave dont le rayon est approximativement égal à la largeur de la fente. Cette courbure concave est constante sur toute la largeur de l'extrémité et comprise entre deux lignes parallèles 12 et 13 situées en amont de la fente de sortie. La première de ces lignes (12) correspond à la fin dudit corps triangulaire 2 et au début de ladite extrémité incurvée 3. La seconde de ces lignes (13) se trouve légèrement en amont des extrémités 14 et 15 de la fente 11, de manière que l'arc décrit par cette fente se trouve dans un plan horizontal.

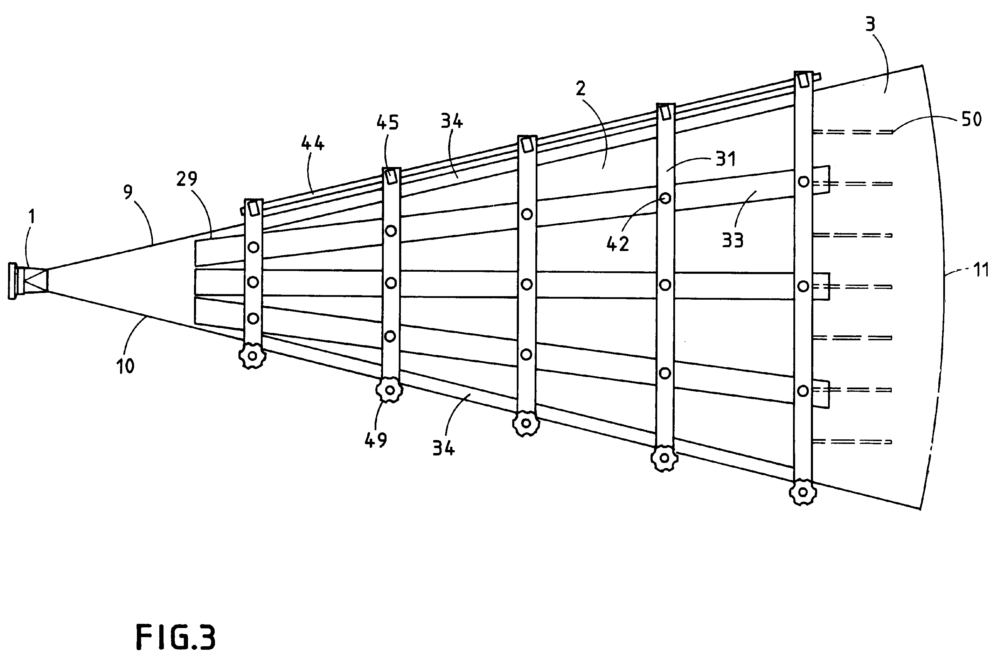

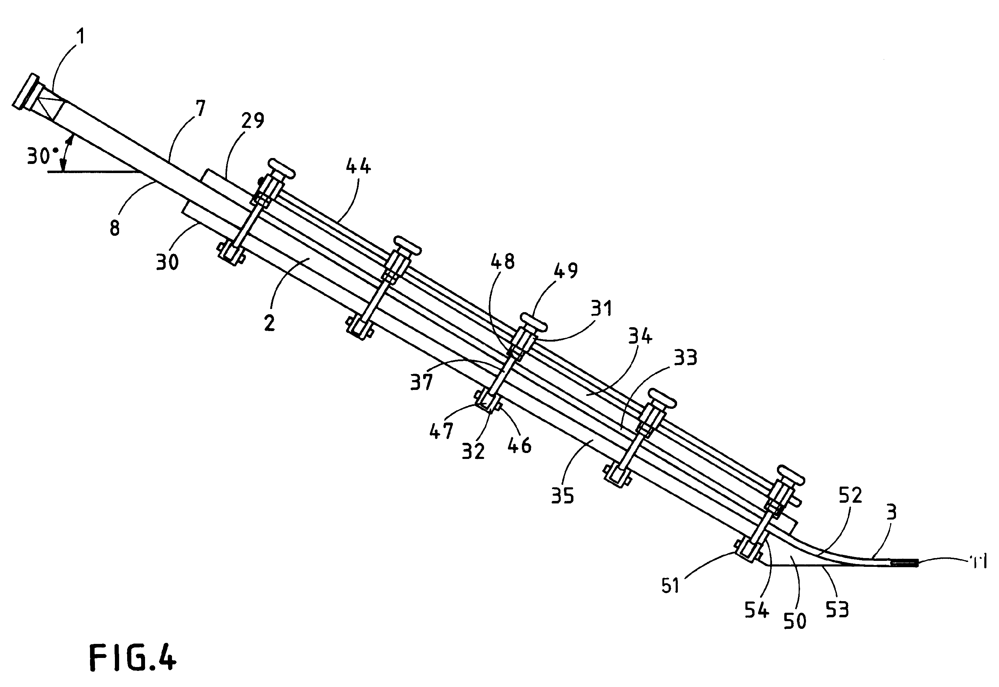

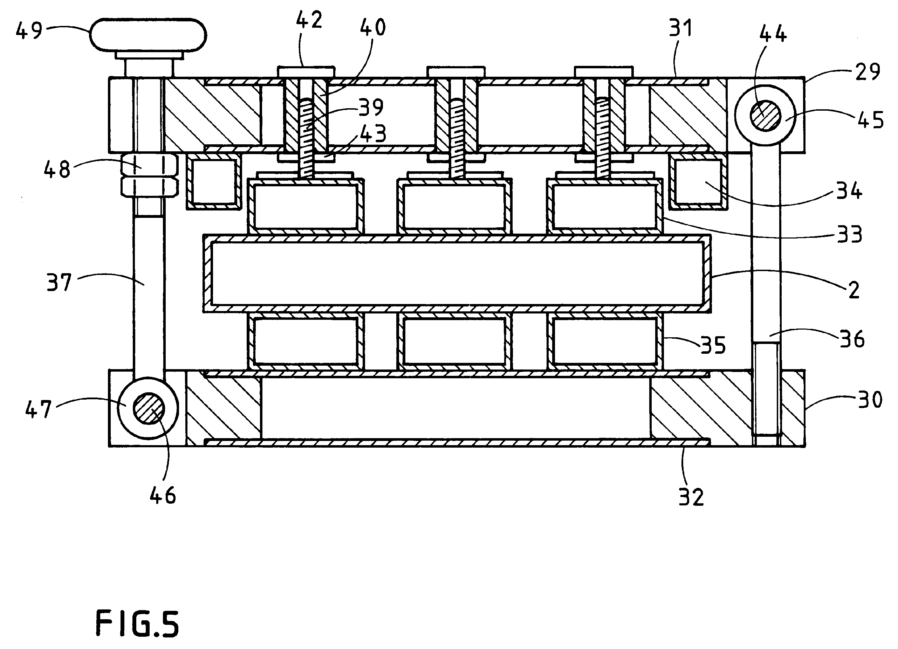

La deuxieme forme d'exécution de la buse selon la présente invention illustrée aux figures 3, 4 et 5 se distingue de la premièrc forme d'exécution illustrée aux figures 1 et 2 par le fait qu'elle présente un rapport longueur:largeur plus faible, à savoir environ 1,8:1. Elle est illustrée avec sa cage de renforcement. Cette forme d'exécution se prête particulièrement bien à la réalisa- tion de buses de très grandes dimensions pouvant atteindre une largeur de l'ordre du mètre ou davantage à l'aide de feuilles triangulaires supérieure 7 et inférieure 8 et de côtés 9 et 10 découpés dans une tôle d'acier inoxydable relativement mince, de environ 3 mm d'épaisseur par exemple.

La cage de renforcement comporte deux grilles supérieure 29 et inférieure 30 formées de longerons transversaux 31, 32 et radiaux 33, 34, 35 appliquées de part et d'autre du corps triangulaire 2 et reliées de chaque côté du corps par des traverses 36, 37.

Les longerons transversaux 32 et radiaux 35 de la grille inférieure 30 sont réalisés sous forme de tubes métalliques de sections respectives carrées et rectangulaires et ils sont solidaires, à savoir soudés les uns aux autres, à toutes leurs croisées.

Les longerons transversaux 31 et les longerons radiaux d'encadrement 34 de la grille supérieure 29 sont réalisés sous forme de tubes métalliques de section carrée, les autres longerons radiaux 33 de cette grille présentant une section rectangulaire.

Les longerons radiaux d'encadrement 34 sont solidaires des extrémités des longerons transversaux 31. Les autres longerons radiaux 33 et les longerons transversaux 31 sont reliés, à toutes leurs croisées, par des moyens d'ajustement de leur interstice.

Ces moyens d'ajustement de l'interstice séparant un longeron transversal 31 d'un longeron radial 33 appuyant sur le corps triangulaire 2 sont destinés à permettre de rectifier finement le courant de masse fluide en ajustant son épaisseur en divers points du corps. Ces moyens comprennent, à chaque croisée concernée, une tige filetée 39 adaptée à un cylindre taraudé 40 servant d'écrou. L'extrémité inférieure de la tige filetée 39 est solidaire du longeron radial 33. Le cylindre taraudé 40 est fixé au longeron transversal 31 par l'intermédiaire de deux disques 42, 43 qui servent d'arrêt de part et d'autre du longeron mais autorisent une rotation du cylindre dans un passage cylindrique vertical pratiqué dans le longeron. Le disque d'arrêt 42 disposé sur le longeron présente une prise à trois trous adaptée à une clé à trois ergots.

Les grilles supérieure 29 et inférieure 30 sont donc reliées entre elles par des traverses 36, 37. Les traverses 36 prévues sur le côté gauche du corps triangulaire 2 sont solidaires chacune de l'extrémité gauche d'un longeron transversal inférieur 32 par leur extrémité inférieure. Mais elles sont reliées chacune à un longeron transversal supérieur 31 par l'intermédiaire d'une barre radiale cylindrique 44 qui traverse à la fois l'extrémité gauche du longeron et l'extrémité supérieure 45 de la traverse. Cette extrémité 45 est elle-même logée dans un évidement adéquat pratiqué verticalement dans l'extrémité gauche du longeron 31 de manière que celui-ci puisse pivoter autour de la barre 44.

Les traverses 37 prévues sur le côté droit du corps triangulaire 2 sont reliées chacune à l'extrémité droite d'un longeron transversal inférieur 32 par l'intermédiaire d'une barrette 46 qui traverse à la fois l'extrémité du longeron et l'extrémité inférieure 47 de la traverse. Cette extrémité 47 est elle-même logée dans un évidement adéquat pratiqué verticalement dans l'extrémité du longeron 32 de manière que la traverse puisse pivoter autour de la barrette 46.

L'extrémité supérieure de chaque traverse 37 est logée de manière amovible dans un évidement vertical pratiqué dans l'extrémité droite de chaque longeron transversal supérieur 31. Cette extrémité supérieure est fixée au longeron par l'intermédiaire d'un double contre-écrou 48 et d'un écrou moleté 49.

Dans cette forme d'exécution, le corps 2 de la buse peut donc être dégagé de la cage de renforcement en desserrant les écrous moletés 49, en dégageant les traverses 37 des longerons supérieurs 31 et en faisant pivoter la grille supérieure 29 autour de la barre 44.

Cette deuxième forme d'exécution comprend également des supports incurvés proéminents 50 solidaires du dernier longeron transversal inférieur 51. Ces supports proéminents 50 présentent chacun une courbure concave adaptée à la courbure de ladite extrémité incurvée. Ils présentent chacun une forme générale d'éperon triangulaire disposé dans un plan vertical, dont un côté supérieur 52 présente une courbure concave adaptée à la courbure de ladite extrémité incurvée 3, un côté inférieur 53 est rectiligne et disposé dans le même plan horizontal que ladite fente de sortie 11, et un petit côté amont 54 est rectiligne et solidaire dudit dernier longeron transversal inférieur 51.

Cette forme d'exécution peut fournir ainsi, par la juxtaposition de plusieurs de ces supports 50 équidistants le long du longeron 51, une augmentation appréciable de la rigidité de l'extrémité incurvée 3. Mais elle fournit par la même occasion un moyen auxiliaire pratique pour le contrôle visuel de la distance de la fente de sortie 11 à une bande de transport, par exemple, sur laquelle il est prévu de déposer la couche de masse fluide.

## Revendications

1. Buse de dépose d'une couche de masse fluide, notamment de pâte foisonnée, comprenant un raccord (1) délimitant un canal d'entrée (4), un corps triangulaire (2) solidaire du raccord, disposé dans un plan formant un angle avec le plan horizontal et présentant une section rectangulaire s'élargissant et s'abaissant vers l'aval, et, dans le prolongement dudit corps (2), une extrémité incurvée (3) finissant tangentiellement au plan horizontal et délimitant une fente de sortie (11) en forme d'arc de cercle centré au sommet du corps, caractérisée par le fait qu'elle comprend une cage de renforcement comportant deux grilles (29, 30) formées de longerons transversaux (31,32) et radiaux (33,34,35) appliquées sur et sous ledit corps triangulaire (2) et reliées de chaque côté par des traverses (36,37), l'une des grilles (29) étant formée de longerons radiaux d'encadrement (34) solidaires des extrémités de ses longerons transversaux (31), ses autres longerons radiaux (33) appuyant sur le corps triangulaire (2) et ses longerons transversaux (31) étant reliés, à toutes leurs croisées, par des moyens d'ajustement de leurs interstices (39,40,42,43), et les longerons transversaux (32) et radiaux (35) de l'autre grille (30) étant solidaires à toutes leurs croisées.

2. Buse de dépose selon la revendication 1, caractérisée par le fait que ledit canal d'entrée (1) présente une section de surface constante passant d'amont en aval d'une forme circulaire à une forme carrée.

3. Buse selon la revendication 1, caractérisée par le fait que ledit corps triangulaire (2) est disposé dans un plan formant un angle de 20 à 40° avec le plan horizontal.

4. Buse selon la revendication 1, caractérisée par le fait que ladite extrémité incurvée (3) présente une courbure concave dont le rayon est égal à 0,2-1,5 fois la largeur de ladite fente de sortie (11).

5. Buse selon la revendication 1, caractérisée par le fait que ladite extrémité incurvée (3) présente une courbure concave constante sur toute sa largeur et comprise entre deux lignes parallèles situées en amont de ladite fente de sortie (11).

6. Buse selon la revendication 1, caractérisée par le fait qu'elle présente un rapport longueur:largeur compris entre 1,5:1 et 2,5:1.

7. Buse selon la revendication 1, caractérisée par le fait qu'elle comprend des supports incurvés proéminents (50) solidaires d'un dernier longeron transversal inférieur (51) et présentant une courbure (52) adaptée à la courbure de ladite extrémité incurvée (3).

## Patentansprüche

1. Mundstück zum Ablagern einer Schicht einer fluiden Masse, insbesondere eines aufgegangenen Teiges, mit einem Anschluß (1), der einen Eintrittskanal (4) begrenzt, einem mit dem Anschluß verbundenen dreieckigen Körper (2), der in einer Ebene angeordnet ist, die einen Winkel mit der Horizontalebene einschließt, und der einen rechteckigen Querschnitt, welcher sich in Richtung stromabwärts vergrößert und abfällt, sowie in der Verlängegung dieses Körpers (2) ein gekrümmtes Ende (3) hat, das tangential zur Horizontalebene ausläuft und einen Austrittsschlitz (11) in Form eines Kreisbogens begrenzt, der um den Scheitel des Körpers zentriert ist, dadurch gekennzeichnet, daß das Mundstück einen Verstärkungskäfig aufweist, der zwei Gitter (29, 30) aufweist, die aus Querholmen (31, 32) und Radialholmen (33, 34, 35) gebildet sind, welche auf dem und unter dem dreieckigen Körper (2) angebracht und auf jeder Seite über Querstreben (36, 37) verbunden sind, wobei eines der Gitter (29) aus radialen Rahmenholmen (34) gebildet ist, die mit den Enden seiner Querholme (31) verbunden sind, wogegen seine anderen Radialholme (33), die am dreieckigen Körper (2) angreifen, und seine Längsholme (31) an allen ihren Kreuzungspunkten durch Mittel (39, 40, 42, 43) zum Einstellen ihrer Zwischenräume verbunden sind, und die Längsholme (32) und Radialholme (35) des anderen Gitters (30) an allen ihren Kreuzungspunkten verbunden sind.

2. Mundstück nach Anspruch 1, dadurch gekennzeichnet, daß der Eintrittskanal (1) einen Querschnitt mit konstanter Fläche aufweist, wobei er von stromaufwärts nach stromabwärts von einer kreisförmigen Form in eine quadratische Form übergeht.

3. Mundstück nach Anspruch 1, dadurch gekennzeichnet, daß der dreieckige Körper (2) in einer Ebene liegt, die einen Winkel von 20 bis 40° mit der Horizontalebene einschließt.

4. Mundstück nach Anspruch 1, dadurch gekennzeichnet, daß das gekrümmte Ende (3) eine konkave Krümmung hat, deren Krümmungsradius gleich dem 0,2- bis 1,5-fachen der Breite des Austrittsschlitzes (11) ist.

5. Mundstück nach Anspruch 1, dadurch gekennzeichnet, daß das gekrümmte Ende (3) über seine gesamte Breite eine konstante konkave Krümmung hat und zwischen zwei parallelen Linien liegt, die stromaufwärts des Austrittsschlitzes (11) angeordnet sind.

6. Mundstück nach Anspruch 1, dadurch gekennzeichnet, daß es ein Verhältnis von Länge:Breite aufweist, das zwischen 1,5:1 und 2,5:1 beträgt.

7. Mundstück nach Anspruch 1, dadurch gekennzeichnet, daß es vorragende gekrümmte Stützen (50) aufweist, die mit einem letzten unteren Querträger (51) verbunden sind und eine Krümmung (52) haben, die an die Krümmung des gekrümmten Endes (3) angepaßt ist.

## Claims

1. A nozzle for depositing a layer of fluid mass, particularly expanded dough, comprising a coupling (1) defining an entry passage (4), an inclined triangular body (2) integral with the coupling and having a parallelepipedic cross-section which widens and slopes downwards in the downstream direction and, in the extension of said body (2), a curved end (3) terminating tangentially to the horizontal plane and defining an exit slot (11) in the form of an arc of a circle of which the centre is at the apex of the body, characterized in that it comprises a reinforcing cage comprising two grids (29,30) formed by transverse and radial spars (31,32; 33,34,35) applied to and beneath the triangular body (2) and connected on either side by cross-members (36,37), one of the grids (29) being formed by radial framing spars (34) fixed to the ends of its transverse spars (31), its other radial spars (33) bearing on the triangular body (2) and its transverse spars (31) being connected at all their intersections by means for adjusting the spacing (39,40,42,43) between them and the transverse and radial spars (32;35) of the other grid (30) being fixed at all their intersections.

2. A nozzle as claimed in claim 1, characterized in that the entry passage (1) has a cross-section of constant area which changes from a circular shape or a square shape in the downstream direction.

3. A nozzle as claimed in claim 1, characterized in that the inclined triangular body (2) is disposed in a plane forming an angle of 20 to 40° with the horizontal plane.

4. A nozzle as claimed in claim 1, characterized in that the curved end (3) has a concave curvature of which the radius is equal to 0.2 to 1.5 times the width of the exit slot (11).

5. A nozzle as claimed in claim 1, characterized in that the curved end (3) has a concave curvature which is constant over its entire width and comprised between two parallel lines situated upstream of the exit slot (11).

6. A nozzle as claimed in claim 1, characterized in that it has a length to width ratio of from 1.5:1 to 2.5:1.

7. A nozzle as claimed in claim 1, characterized in that it comprises projecting curved supports (50) fixed to a last lower transverse spar (51) and having a curvature (52) adapted to the curvature of the curved end (3).
